Europäisches Patentamt

European Patent Office

Office européen des brevets

(19)

(11) **EP 0 802 469 B1**

(12) **FASCICULE DE BREVET EUROPEEN**

(45) Date de publication et mention
de la délivrance du brevet:
**01.08.2001 Bulletin 2001/31**

(51) Int Cl.⁷: **G05D 1/06**, G08G 5/04,
G01C 21/00

(21) Numéro de dépôt: **97400746.0**

(22) Date de dépôt: **01.04.1997**

(54) **Dispositif d'anti-collision terrain pour aéronef avec prédiction de virage**

Vorrichtung zur Grundkollisionsvermeidung für Flugzeuge mit Kursvorhersage

Device for aircraft ground collision avoidance with turn prediction

(84) Etats contractants désignés:
**AT BE CH DE DK ES FR GB GR IE IT LI LU MC NL
PT SE**

(30) Priorité: **15.04.1996 FR 9604678**

(43) Date de publication de la demande:
**22.10.1997 Bulletin 1997/43**

(73) Titulaire: **DASSAULT ELECTRONIQUE
F-92210 Saint-Cloud (FR)**

(72) Inventeur: **Meunier, Hugues
78690 Les Essarts Le Roi (FR)**

(74) Mandataire: **Plaçais, Jean-Yves et al
Cabinet Netter,
40, rue Vignon
75009 Paris (FR)**

(56) Documents cités:
**EP-A- 0 453 327          EP-A- 0 565 399
WO-A-85/03566          WO-A-92/21077**

**Description**

L'invention concerne le domaine général des aides à la navigation et à la sécurité aériennes.

Dans le fascicule-brevet EP-A-0 565 399, la Demanderesse a proposé un dispositif comportant:

- une entrée pour recevoir des indications d'état, propres à permettre une prédiction de la trajectoire de l'aéronef,
- une mémoire de travail, propre à contenir une carte locale temporaire, à partir de laquelle est définissable une enveloppe en altitude du terrain, dans la zone où évolue l'aéronef,
- de premiers moyens de prédiction de trajectoire, pour établir, à partir desdites indications d'état et de paramètres choisis de vol, une trajectoire limite verticale de l'aéronef (dans le "plan" vertical),
- de premiers moyens de comparaison pour faire une première comparaison entre cette trajectoire limite verticale et la partie correspondante de l'enveloppe en altitude, pour déterminer un risque de collision avec le sol, et
- des moyens d'alarme pour établir au moins un état d'alarme, en fonction du résultat de la première comparaison.

Cette solution présente des avantages indéniables, en ce qu'elle procure un dispositif anti-collision entièrement embarqué, et surtout capable de prendre en compte des situations futures de l'aéronef.

Cependant, il s'est avéré que certains lieux, en particulier les abords de certains aéroports, ont une topologie qui est de nature à provoquer toujours une alarme, dans le cadre des manoeuvres d'approche standard. Quoiqu'il soit concevable d'admettre de tels cas, à titre exceptionnel, ce type d'exception est néfaste: en effet, un système d'alarme devrait en principe intervenir toujours à bon escient; à défaut, on court le risque qu'une alarme soit ignorée, à un moment où elle doit au contraire être impérativement prise en compte.

Ce problème, connu depuis longtemps, n'a jamais été complètement résolu dans les systèmes d'anti-collision connus.

La présente invention vient précisément offrir une solution, à partir du dispositif précité, décrit dans EP-A-0 565 399.

Selon un aspect général de l'invention, le dispositif comporte en outre:

- de seconds moyens de prédiction pour établir, à partir desdites indications d'état et de paramètres choisis de vol, une trajectoire limite latérale de l'aéronef, d'un côté de la verticale de la trajectoire de vol,
- de seconds moyens de comparaison pour faire une seconde comparaison entre cette trajectoire limite latérale et la partie correspondante de l'enveloppe en altitude,

et les moyens d'alarme sont agencés pour modifier l'un au moins des états d'alarme relatifs à la première comparaison, si les seconds moyens de comparaison n'indiquent pas de risque de collision avec le sol.

Bien qu'un tel dispositif, n'opérant que d'un côté, fournisse déjà un progrès, il est estimé préférable de travailler des deux côtés. A cet effet, le dispositif est complété par:

- de troisièmes moyens de prédiction pour établir, à partir desdites indications d'état et de paramètres choisis de vol, une autre trajectoire limite latérale de l'aéronef, de l'autre côté de la verticale,
- de troisièmes moyens de comparaison pour faire une troisième comparaison entre cette autre trajectoire limite latérale et la partie correspondante de l'enveloppe en altitude,

et les moyens d'alarme sont agencés pour inhiber l'état d'alarme relatif à la première comparaison qui indique le risque maximum, au moins dans le cas où à la fois les seconds et les troisièmes moyens de comparaison n'indiquent pas de risque de collision latérale avec le sol.

D'autres caractéristiques et avantages de l'invention apparaîtront à l'examen de la description détaillée ci-après, et des dessins annexés, sur lesquels :

- la figure 1 est le schéma de principe très général du dispositif antérieur, décrit dans EP-A-0 565 399;

- la figure 2 est un schéma de principe plus détaillé du même dispositif antérieur;

- la figure 3 est un schéma de principe encore plus détaillé, mais partiel, du même dispositif antérieur;

- les figures 4A et 4B sont deux autres schémas détaillés, qui, réunis (compte-tenu de leur recoupement), définissent un mode de réalisation particulier du même dispositif antérieur;

- la figure 5 (figure 18 de EP-A-0 565 399) illustre un exemple de courbe de protection anti-collision connue;

- la figure 6 (figure 21 de EP-A-0 565 399) est un exemple de trajectoire d'évitement connue;

- la figure 7 est le schéma de principe très général d'un dispositif selon la présente invention;

- les figures 8A et 8B illustrent plus complètement une manoeuvre d'évitement dans le plan vertical;

- les figures 9A à 9D illustrent une manoeuvre d'évitement en virage, en différentes situations ; et

- la figure 10 est un schéma définissant des procédures anti-collision selon la présente invention.

Les dessins annexés sont pour l'essentiel de caractère certain, et font donc partie intégrante de la présente description. Ils pourront non seulement servir à mieux faire comprendre celle-ci, mais aussi contribuer à la définition de l'invention, le cas échéant.

En outre, et compte-tenu de la technicité de la matière, le contenu descriptif de EP-A-0 565 399 est à considérer comme intégralement incorporé à la présente description. Il en est de même pour le document suivant:

- Note de DASSAULT ELECTRONIQUE et ROCKWELL Avionics - Collins intitulée "A New Approach to CFIT Prevention : GCAS GROUND COLLISION AVOIDANCE SYSTEM", diffusée publiquement à partir de juin 1995.

La description détaillée ci-après concerne le cas des avions civils, remarque étant faite que l'invention peut s'appliquer à d'autres catégories d'aéronefs.

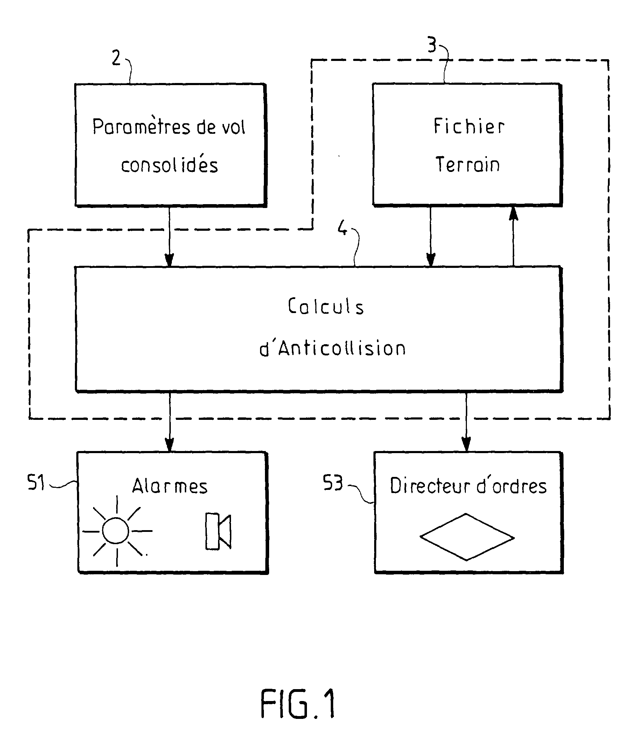

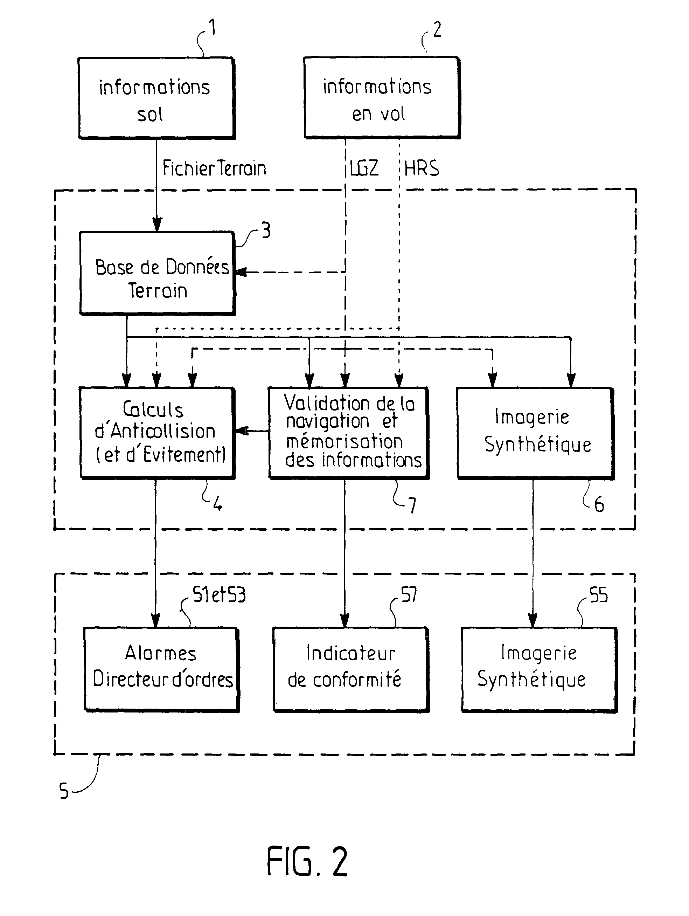

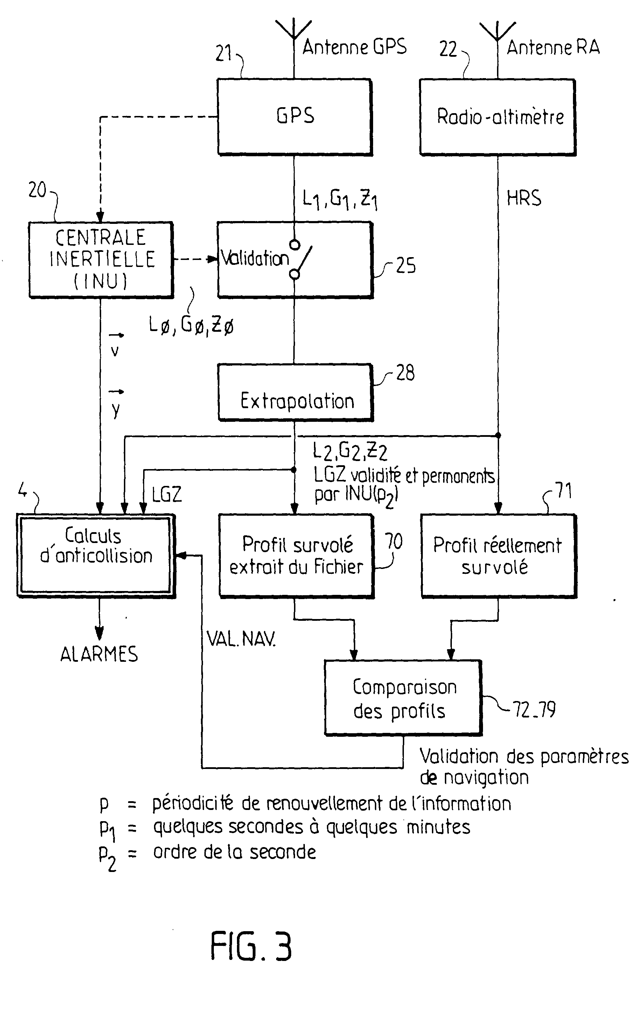

Il est fait référence aux figures 1 à 4B. Le dispositif décrit dans EP-A-0 565 399 est essentiellement destiné à être installé à bord d'un aéronef. Celui-ci comporte des équipements 2 capables de fournir sous forme de signaux électriques des indications de paramètres du vol (figure 3), tels que :

- une centrale inertielle 20 ou INU,
- un instrument de radionavigation, ici un récepteur GPS 21, avec son antenne,
- un radio-altimètre 22, avec son antenne,

ou d'autres senseurs embarqués de navigation.

La centrale inertielle 20 fournit les composantes des vecteurs vitesse (V) et accélération (GAMMA) de l'aéronef. On peut en déduire les angles caractéristiques associés: incidence, dérapage, pente, tangage, cap, gîte, notamment. Cependant, dans la mesure où la centrale inertielle mesure et/ou utilise certains de ces angles pour déterminer les vecteurs vitesse et accélération, il est préférable de recueillir directement les valeurs de la centrale inertielle pour lesdits angles, là où l'on s'en sert pour la mise en oeuvre de l'invention. Ces valeurs angulaires peuvent être affichées et/ou utilisées au niveau du poste de commande.

Pour l'altitude, la centrale inertielle coopère avec un altimètre barométrique (non représenté), de manière connue.

On définira les notations ci-après :

- Zb est l'altitude barométrique donnée par la mesure de la pression atmosphérique, et varie selon l'altitude et les conditions météorologiques,
- Zi est l'altitude inertielle calculée par la double intégration de l'accélération verticale mesurée par les accéléromètres de la centrale à inertie (variations à long terme),
- Zbi est l'altitude baro-inertielle, c'est-à-dire Zb filtré par Zi (boucle du 3ème ordre, par exemple),
- Zc sera l'altitude calculée (HRS + Zta), où HRS est la hauteur radio-sonde donnée par le ou les radio-altimètres de l'aéronef (précision de quelques mètres), et Zta sera l'altitude du terrain sous l'aéronef donnée par le fichier terrain (défini plus loin)
- Zgps est l'altitude fournie par le GPS.

La plupart du temps, les aéronefs sont équipés d'une batterie de centrales inertielles, et d'une logique de décision tenant compte de l'ensemble des indications de ces centrales. Pour la mise en oeuvre de l'invention, les informations peuvent provenir d'une seule ou de plusieurs centrales (dans la mesure où elles sont confirmées).

L'instrument de radionavigation 21 fournit des mesures brutes de latitude L1, longitude G1, et altitude Z1 (=Zgps), rafraîchies à une cadence pl de quelques secondes à quelques minutes. Par intégration sur les vecteurs vitesse et accélération, la centrale inertielle 20 fournit d'autres mesures de latitude L0, longitude G0, et altitude Z0 (=Zbi), précises mais dérivant dans le temps. Un bloc 25 compare les deux types de mesure, et valide les grandeurs L1,G1,Z1, si elles sont cohérentes avec L0, G0, Z0. De telles techniques de validation sont connues. Les mesures L2,G2,Z2 validées sont disponibles à la cadence p1. Mais elles sont affinées à partir de la centrale inertielle à une cadence p2 d'environ une seconde.

Un bloc 28 extrapole les informations entre le dernier instant de mesure par l'instrument 21 et l'instant actuel (cette extrapolation est utile notamment en cas de problème de cadence de fourniture des informations, qui peut être trop faible).

Le radio-altimètre 22 délivre la hauteur au dessus du sol, notée HRS.

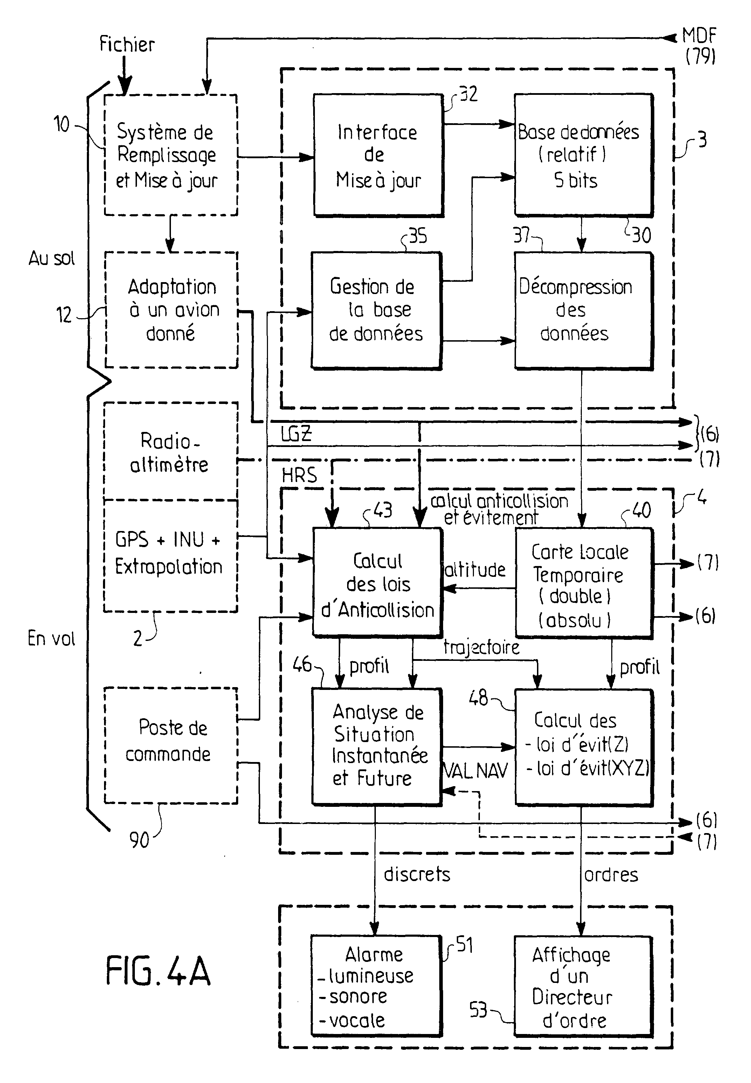

Un bloc 3 contient un fichier terrain, établi d'une façon que l'on décrira ci-après. En fonction des grandeurs L et G, on accède à une partie de ce fichier, dite carte locale, et stockée dans une mémoire locale 40 (Figure 4A).

A partir de cette carte locale, et des grandeurs L, G, Z ainsi que HRS, le bloc 4 effectue des calculs d'anti-collision, de préférence accompagnés de calculs d'évitement de terrain.

En présence d'un risque de collision, une alarme (51) est émise. Un directeur d'ordres 53 peut suggérer une manoeuvre d'évitement. Ceci est à destination du poste de commande.

La carte locale peut être également utilisée pour la génération d'une image synthétique (60), avec son dispositif de visualisation 55.

Elle va encore servir à des fonctions (7) de validation de la navigation et de mémorisation d'informations d'écart (ou de différences), notées MDF.

Ces écarts sont transférés au sol du bloc 79 au bloc 10, puis triés et servent à la mise à jour totale ou partielle de la base de données 30.

La mémoire 70 retient le profil survolé cartographié, selon la séquence des données L, G, Z. La mémoire 71 retient le profil réel survolé, tiré de la hauteur HRS. L'écart entre ces deux profils est calculé en 72.

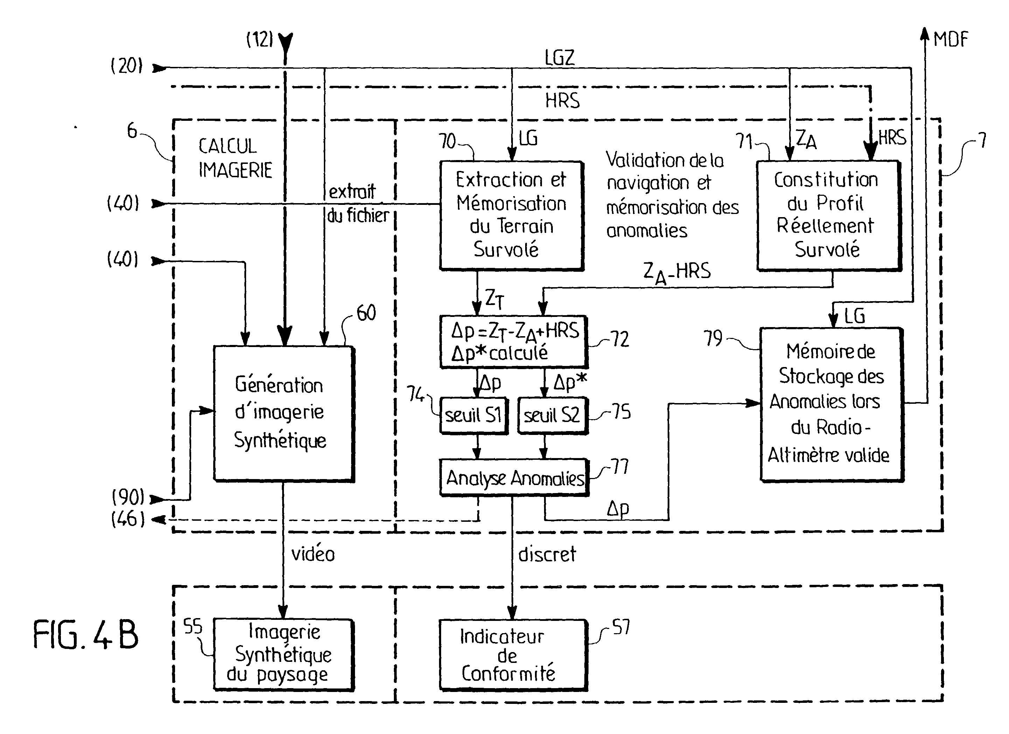

Plus précisément (figure 4B), l'écart est comparé à deux seuils en 74 et 75, respectivement. Il est ensuite analysé (77), d'où:

- l'actionnement d'un indicateur de conformité 57 confirmant le bon fonctionnement du dispositif;
- la production d'un signal VAL.NAV., pour valider les calculs du bloc 4; et
- selon d'autres critères, la mémorisation d'informations MDF dans une mémoire 79, en correspondance des valeurs L et G pour lesquelles ils se sont manifestés. Ces informations MDF peuvent alors servir de base, après le vol, pour la mise à jour effectuée dans le système 10 de la figure 4A.

En pratique, le bloc d'analyse 77 va faire une corrélation des deux entrées, mais en tenant compte :

- de l'historique (passé récent) du vol,
- de la confiance estimée en les données du radio-altimètre (limites de fonctionnement compte-tenu de l'assiette de l'aéronef, auto-contrôle),
- du caractère fugace du franchissement du seuil,
- de l'analyse du résultat (biais ou bruit ou autre),
- éventuellement d'informations mémorisées adéquates.

De son côté, le bloc 35 de gestion de la base de données fait usage d'au moins un index qui peut être stocké dans la mémoire de masse 30, de façon à permettre l'identification et l'accès rapide aux données contenues dans la base de données BDT.

Le poste de commande 90 fournit lui aussi des informations, qui comprennent un "mot d'état d'entrée" indiquant au moins:

- si le pilotage est automatique ou manuel ;
- les caractéristiques (notamment de vol) de l'aéronef.

L'une des bases essentielles de EP-A-0 565 399 est le fait que la Demanderesse a perçu la possibilité de stocker à bord d'un aéronef un fichier de terrain susceptible de représenter la quasi-totalité du bloc terrestre, dans la limite de contour et de résolution qui convient pour les besoins d'un aéronef.

L'analyse de la situation instantanée et prédite de l'aéronef peut alors se résumer à un ensemble de tests de courbes, propre à générer deux types d'alarmes :

- une pré-alarme (ou "alerte") indiquant une configuration dangereuse à moyen terme, et
- une alarme indiquant une configuration nécessitant une action immédiate du pilote, car la sécurité du vol est mise en cause.

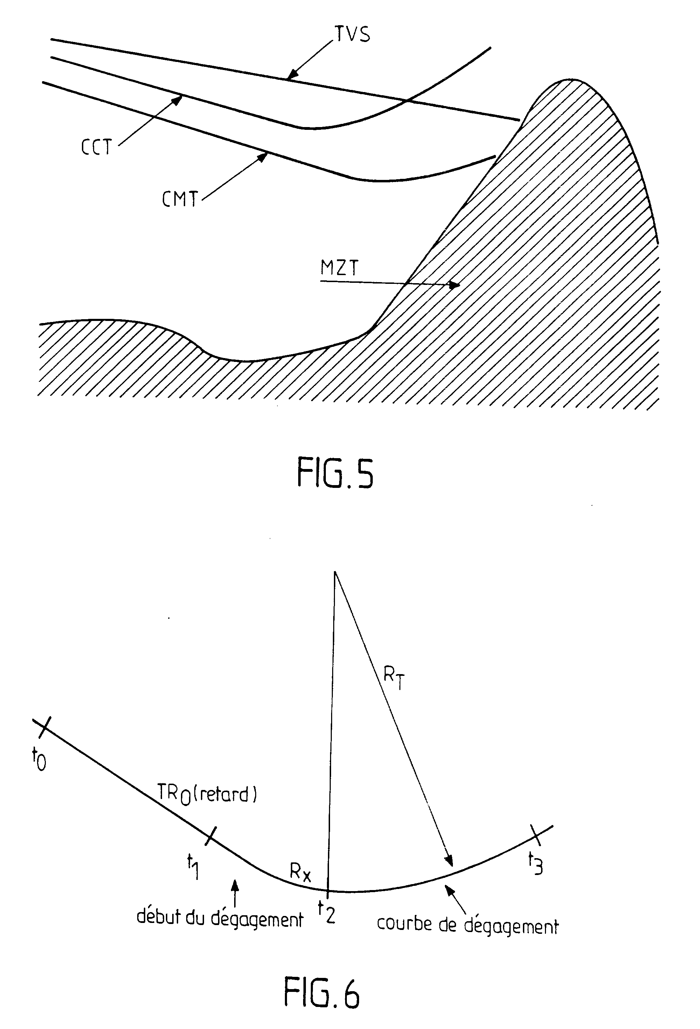

A cet effet, on prévoit deux surfaces (des courbes dans l'espace) de protection de l'aéronef vis-à-vis du terrain, définies suivant le même principe mais avec des paramètres différents, et comprenant (figure 5; figure 6, pour l'une de ces surfaces):

- une surface à court terme CCT, principalement destinée à éviter un accident. Dès qu'un point du terrain entre dans la surface ou l'enveloppe supérieure de la surface CCT, le pilote doit intervenir (alarme) en effectuant une manoeuvre d'évitement.
- une surface à moyen terme CMT, principalement destinée à prévenir le pilote que la trajectoire de son aéronef va rencontrer un obstacle si elle se poursuit telle quelle, et qu'il doit envisager une manoeuvre d'évitement (préalarme).

Ces surfaces, qui constituent un élément important du système de protection, peuvent être élaborées à partir de nombreux paramètres statiques et dynamiques de l'aéronef, en particulier :

- la fonction de transfert de pilotage de l'aéronef, c'est-à-dire sa capacité à manoeuvrer,
- les retards $TR_0$ dus au temps de réaction du pilote de l'aéronef,
- la vitesse horizontale $V_h$ de l'aéronef,
- la vitesse ascensionnelle $V_z$ de l'aéronef,
- le facteur de charge admissible n.g,
- la hauteur de sécurité prévue, et
- le roulis de l'aéronef.

Pour la suite de la description, quelques définitions sont nécessaires:

- on appelle "axe instantané" de la trajectoire de l'aéronef, de manière prédéfinie, soit la tangente à la trajectoire instantanée (direction du vecteur vitesse instantané), soit l'axe de la trajectoire passée et prédite (si l'aéronef est en virage, l'axe est alors courbe), soit encore un axe (en principe intermédiaire) défini par exemple une combinaison linéaire pondérée entre les deux précédents;
- on appelle "plan vertical" une surface (non nécessairement plane) qui contient la verticale passant par l'aéronef et un axe instantané de la trajectoire de l'aéronef ; s'agissant de l'axe de la trajectoire passée et prédite, le "plan vertical" est une surface courbe si l'aéronef est en virage ; on qualifie de "verticales" les manoeuvres dont la composante principale est dans un plan vertical ;
- on appelle "plan horizontal" le plan horizontal passant un point de référence de l'aéronef (centre de gravité par exemple) et on qualifie comme "horizontales" ou "latérales" les manoeuvres dont la composante principale est dans un plan horizontal ; là aussi, le "plan" horizontal pourrait être une surface courbe dans l'espace, définie d'après la trajectoire de l'aéronef ;
- on distingue, parmi les manoeuvres horizontales, celles qui vont à gauche et celles qui vont à droite de la trajectoire prédite de l'aéronef ;
- enfin les mots "vertical", ainsi que "horizontal" ou "latéral" seront également utilisés pour qualifier notamment les obstacles et les risques qui peuvent être rencontrés lors des manoeuvres.

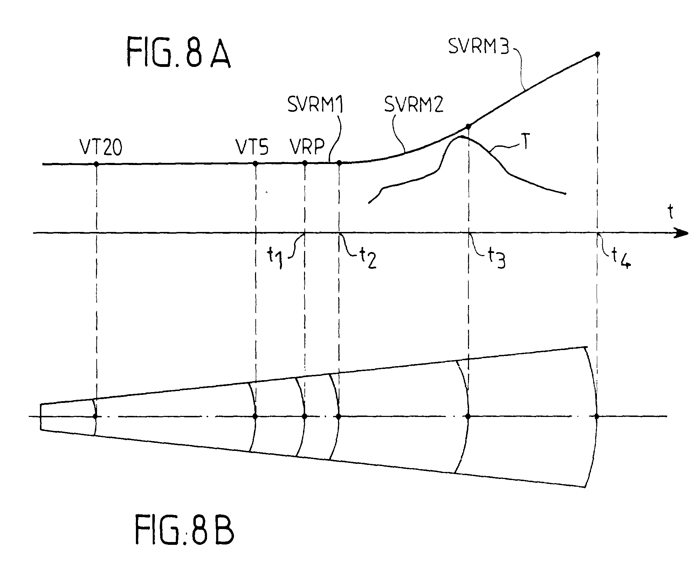

La courbe limite d'évitement dans le plan vertical va être définie par trois tronçons (figures 6 et 8A):

- de $T_0$ à $T_1$, la poursuite de la trajectoire telle quelle pendant un temps égal au retard RT0 = $T_1$ - $T_0$ (correspondant à un temps de réaction),
- de $T_1$ à $T_2$, une période de transition (SVRM1 sur la figure 8A) due à une éventuelle diminution du roulis et au changement du rayon de courbure de la trajectoire passant de l'infini au rayon RT ascensionnel,
- de $T_2$ à $T_3$, la trajectoire d'évitement proprement dite (SVRM2 sur la figure 8A), dont le rayon de courbure RT est directement fonction du carré de la vitesse linéaire de l'aéronef, divisé par le facteur de charge réellement appliqué, soit

$$R_T = (V_h)2_{/n.g}$$

Ce qui précède a, pour l'essentiel, été indiqué sur la figure 6 de EP-A-0 565 399.

Par rapport à la figure 6, il est souhaitable (figure 8A) d'ajouter à la courbe limite un quatrième tronçon:

- au delà de T3, une ligne droite SVRM3 de pente liée aux caractéristiques (performances) de l'aéronef.

La figure 8B (vue de dessus) fait apparaître qu'en pratique la courbe limite d'évitement est une surface dans l'espace. Ainsi, les limites VT20, VT5 et VRP de la figure 8A deviennent des segments curvilignes, définis ici dans les plans horizontaux passant par les points VT20, VT5 et VRP tels qu'illustrés en figure 8A.

Les figures 8A et 8B reprennent, en y ajoutant, les éléments de la figure 6, dans un traitement d'une nature différente:

- est définie d'abord une trajectoire correspondant à une manoeuvre standard d'évitement dans le plan vertical SVRM ("Standard Vertical Recovery Manoeuver");
- en prenant l'axe instantané de la trajectoire de l'aéronef et/ou selon l'orientation de la trajectoire prédite (ou leurs combinaisons linéaires), on peut faire glisser sur cet axe la SVRM, jusqu'au point où elle rencontre l'enveloppe du terrain;
- on peut alors définir un temps ou point de référence vertical VRP ("Vertical Reference point"), qui est le début de la SVRM;
- en amont de ce point VRP sur la trajectoire prédite, on définit deux temps VT5 et VT20, avec par exemple VT5 = VRP - 5 secondes, et VT20 = VRP - 20 secondes;
- une préalarme et une alarme "verticales" sont alors définies, respectivement dès que l'aéronef passe le point VT20, et dès qu'il passe le point VT5 (l'alarme "écrase" naturellement la préalarme).

La différence de traitement tient au fait que, comme le montre la figure 8A, la manoeuvre d'évitement est définie par rapport au terrain T, plutôt que par rapport à la position présente de l'aéronef.

Les moyens techniques qui viennent d'être définis donnent satisfaction dans la majeure partie des situations rencontrées en pratique.

En bref, ils permettent de fournir au(x) pilote(s) de l'aéronef un signal d'alarme "à cabrer" (en anglais "Pull up"), si la trajectoire prédite laisse supposer un risque certain vis-à-vis du terrain survolé avoisinant, afin que le pilote puisse initier d'urgence une manoeuvre d'évitement de ce terrain avec une marge minimum de sécurité. La notion de marge minimum de sécurité s'entend à la fois en temps de réaction de l'homme et en distance vis-à-vis du terrain évité. L'expression "terrain survolé avoisinant" tient compte non seulement du terrain directement rencontré dans l'axe de la trajectoire de l'aéronef, mais aussi de ses parties voisines.

A ce signal d'alarme est associé un signal préalable (dit "alerte"), qui intervient quelques secondes auparavant, afin de prévenir l'équipage de la proximité de ce risque potentiel.

Cependant, il existe des cas où il est normal que l'aéronef dépasse le point ultime pour effectuer la manoeuvre d'évitement standard. Or, au-delà de ce point, aucune manoeuvre d'évitement "verticale" n'est plus possible.

Ces cas correspondent notamment à des trajectoires qu'il faut effectuer dans un environnement montagneux assez escarpé. Ces trajectoires se dirigent dans un premier temps vers un relief qui monte beaucoup plus haut que l'altitude actuelle de l'aéronef. Par conséquent, une fois dépassé le point ultime VRP, l'aéronef ne peut plus franchir avec certitude ce relief par une manoeuvre dans le plan vertical le long de l'axe de la trajectoire prédite. La trajectoire se poursuit par des changements d'orientation de l'aéronef. Ceux-ci se rencontrent notamment au cours d'approches vers des aéroports entourés de reliefs, formant des vallées encaissées.

On pourrait penser que, ce type de problème ayant déjà été rencontré avec les aéronefs militaires, il est aisé de transposer les moyens utilisés par ces derniers, pour les appliquer à des dispositifs anti-collision pour aéronef civil. La pratique a montré que cette transposition est loin d'être immédiate, pour de multiples raisons, dont le fait que de fortes accélérations sont à la fois nettement moins accessibles à l'aéronef, et très vite intolérables, voire invalidantes, pour les passagers.

Il est également possible de définir pour les aéronefs civils une manoeuvre d'évitement latérale standard (SHRM), susceptible d'être initiée d'urgence pour éviter un risque de collision avec le terrain environnant avec des marges minimum de sécurité (en temps de réaction et en distances latérales MH et en hauteur MV vis-à-vis du terrain évité).

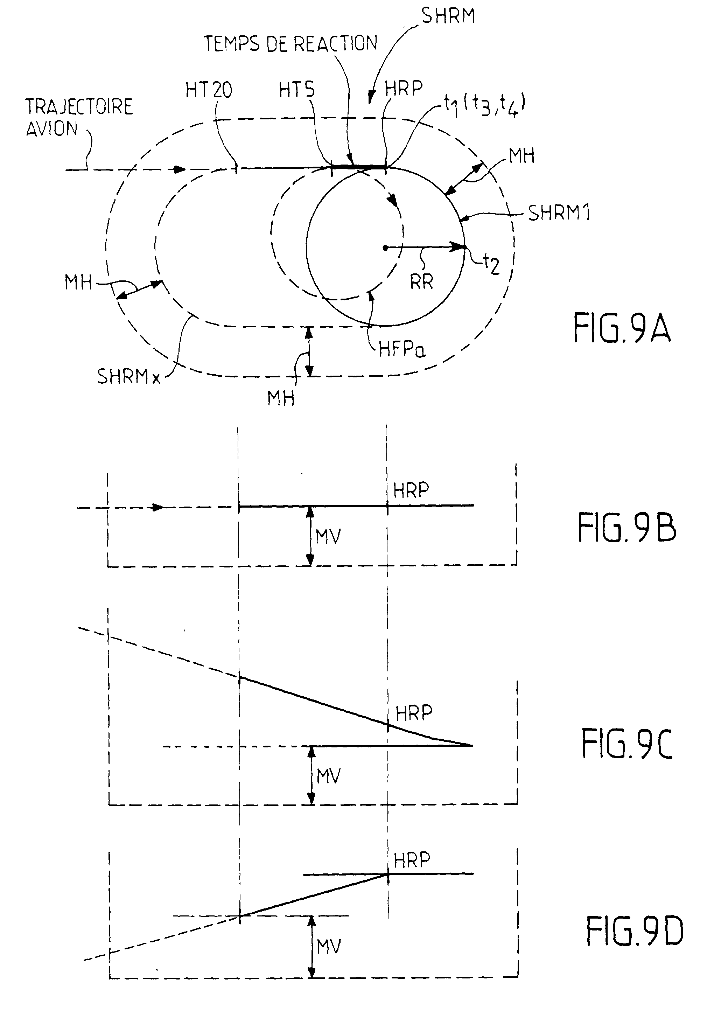

On décrira d'abord un exemple particulier, en référence aux figures 9A à 9D.

La trajectoire d'évitement SHRM proprement dite commence en un point HRP situé sur la trajectoire prédite. Avant ce point, on prévoit deux points anticipés HT5 et HT20 également situés sur la trajectoire prédite, respectivement à par exemple 5 et par exemple 20 secondes en amont du point HRP, compte-tenu de la vitesse présente de l'aéronef.

On considère d'abord le cas où l'aéronef est en vol horizontal (figures 9A et 9B):

- le premier segment SHRM1 (de $t_1$ à $t_2$) consiste en une mise en virage accentuée, avec par exemple un rayon de virage RR de l'ordre de 4 kilomètres (2 milles nautiques), compatible avec les performances de l'aéronef,
- le second segment SHRM2 (de $t_2$ à $t_3$) consiste en la poursuite du virage accentué, de façon à revenir vers le point HRP,
- un troisième segment SHRM3 (de $t_3$ à $t_4$) peut consister en une réitération des deux premiers segments (sans la mise en virage), de façon à revenir vers le point HRP, avec prise d'altitude, le cas échéant.

Une trajectoire réelle de l'aéronef pourra être HFPa (trait tireté), car le pilote dispose d'une marge de manoeuvre pour commander un virage encore plus accentué que celui de la SHRM.

En trait d'axe est représentée une trajectoire SHRMx, qui est la limite de trajectoire SHRM obtenue dans l'hypothèse d'une réaction instantanée du pilote (dès le dépassement du point HT20).

Il est fixé une contrainte suivant laquelle toutes les trajectoires comprises entre SHRM et SHRMx doivent rester à une distance au moins MH des reliefs, horizontalement, et à une distance MV des reliefs verticalement. MH peut être choisie de l'ordre de par exemple 1 kilomètre (0,5 mille nautique); MV peut être choisie de l'ordre de par exemple 150 mètres (450 pieds).

Dans le cas des figures 9A et 9B, ceci revient à considérer tous les points du domaine (plan, ou courbe) compris entre SHRM et SHRMx, pour leur appliquer les conditions de distance sur MH et MV. Ceci peut être conduit sans difficulté en vérifiant qu'aucun relief ne dépasse le domaine plan correspondant à partir de la carte locale tirée du fichier de terrain embarqué, dont la précision est en principe augmentée aux abords des aéroports et des zones de trajectoires d'approche dans un environnement escarpé.

Dans les cas où l'aéronef est en descente (figure 9C), ou en montée (Figure 9D), la phase SHRM1 est modifiée pour lui permettre de retrouver une condition de vol horizontal. Elle peut s'en trouver allongée dans le temps.

Dans tous les cas, les contraintes de distance latérale et en hauteur s'appliquent sur l'ensemble du domaine SHRMx+SHRM; par conséquent, en cas de montée, la contrainte de distance verticale s'applique dès le point HT20 (Figure 9D).

Si l'aéronef est en virage, la trajectoire prédite tient compte de la situation initiale de l'aéronef.

Plus généralement, la manoeuvre SHRM est définie comme étant une trajectoire qui:

- se décompose en:

  . une continuation de la trajectoire présente prenant en compte la situation initiale (vitesses, roulis, pente, ...) pendant un temps de réaction initial, ce qui mène en un point HRP,
  . une mise en virage à partir d'un point de référence HRP à l'instant noté $t_1$ sur la figure 9A, à une inclinaison supérieure à 20° (avec un taux de roulis de 15°/s par exemple), et

    .. en cas de vol en descente, avec l'annulation de la vitesse verticale pendant un temps $t_2$ (figure 9A), par exemple les 90 premiers degrés du virage, de façon à maintenir l'aéronef en palier;

  . une poursuite du vol en virage de façon à effectuer un cercle complet (voire plusieurs),

    .. dans le cas d'un vol en palier ou en montée, à une altitude égale ou au moins égale à l'altitude présente,
    .. dans le cas d'un vol en descente, à une altitude au moins égale à l'altitude présente diminuée de la perte d'altitude nécessaire pour se mettre en palier;

- permet d'éviter le terrain environnant pour :

  . une marge verticale (MV) au moins égale à une valeur prédéfinie (par exemple 450 pieds) par rapport à la partie horizontale de cette trajectoire (dans le cas le plus défavorable)
  . une marge horizontale (MH) au moins égale à une valeur prédéfinie (par exemple 0,5 NM) par rapport à la trajectoire.

Ces marges doivent tenir compte du temps de réaction initial.

- est compatible avec les capacités de l'aéronef au début de cette manoeuvre,

- nécessite une inclinaison en principe plus sévère que celle qui serait mise en oeuvre pour un virage standard mené en l'absence de risque de collision,

- autorise un temps de réaction préalable pour initialiser cette manoeuvre avant un point de référence HRP.

Il est à noter que :

- HRP est vu comme le point ultime à partir duquel la mise en virage doit être faite.

- Cette manoeuvre a pour but de permettre à un aéronef de revenir à son endroit présent réputé "sûr" et de pouvoir (s'il le juge utile) cercler en montée pour se sortir de cette situation, potentiellement dangereuse.

- La trajectoire décrite correspond à la trajectoire ultime pour effectuer une manoeuvre d'évitement horizontal.

En conséquence, elle doit permettre à un pilote de pouvoir effectuer une manoeuvre d'évitement horizontale, qui, normalement, sera

- plus serrée que la SHRM (donc avec un virage plus serré), et
- comportera une mise en virage avant le point HRP.

Comme en vertical, le traitement est "inversé", c'est à dire que l'on détermine d'abord quel est l'ensemble SHRM (et SHRMx) limite qui répond aux contraintes de distance latérale et verticale par rapport au relief de la carte locale.

Ceci se fait pour l'extrapolation de la trajectoire présente, et pour un éventail de trajectoires avoisinant celle-ci, de la même manière que cela est illustré en figure 8B pour la SVRM.

A partir de là, on sait déterminer les points HT20 et HT5.

En fait, on aura généralement deux possibilités différentes, respectivement à droite (r) et à gauche ($\ell$) de la trajectoire présente de l'aéronef. Il en résulte deux points HRPr et HRP$_\ell$. Là où il n'y a pas lieu de distinguer la droite et la gauche, on appellera (i) l'un des côtés, et (j) l'autre. Les notations correspondantes sont HRP$_i$ et HRP$_j$.

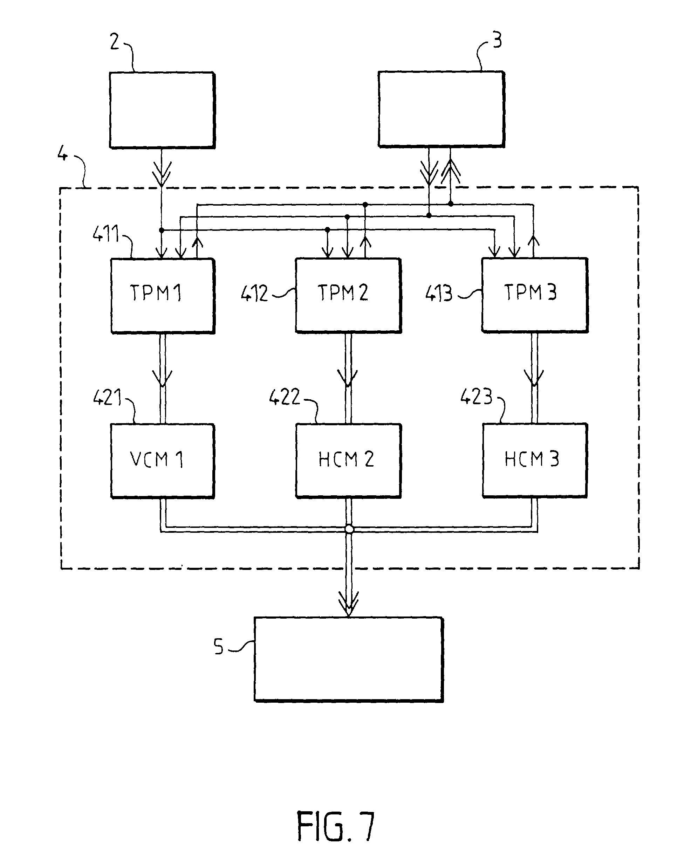

Pour la mise en oeuvre de ces fonctions, la présente invention prévoit des moyens qui sont illustrés sur la figure 7, d'une façon comparable à la figure 1. L'unité 4 est maintenant subdivisée en trois chaînes, qui comprennent :

- de premiers moyens de prédiction de trajectoire TPM1 référencés 411, suivis de premiers moyens de comparaison dans le plan vertical VCM1, référencés 421;

- de seconds moyens de prédiction de trajectoire TPM2 référencés 412, suivis de seconds moyens de comparaison opérant latéralement, d'un côté du plan vertical HCM2, notés 422; et

- de troisièmes moyens de prédiction de trajectoire TPM3 référencés 413, suivis de troisièmes moyens de comparaison HCM3, notés 423, opérant latéralement, de l'autre côté du plan vertical.

A partir de là, l'unité de décision d'alarme 5 opère d'une manière que l'on va maintenant décrire.

On désigne par t l'instant présent de la trajectoire de l'aéronef. Pour déterminer si l'aéronef a dépassé le point VT20 de la figure 8, on détermine donc le signe de l'expression: (t - VT20). Il est précisé que des notations comme VT20 désignent à la fois l'instant prévu au point VT20 en amont du point de référence, qui est ici VRP, et le point de la trajectoire qui correspond à cet intervalle de temps. L'argument (t-VT20) est positif si le point VT20 est dépassé, négatif dans le cas contraire.

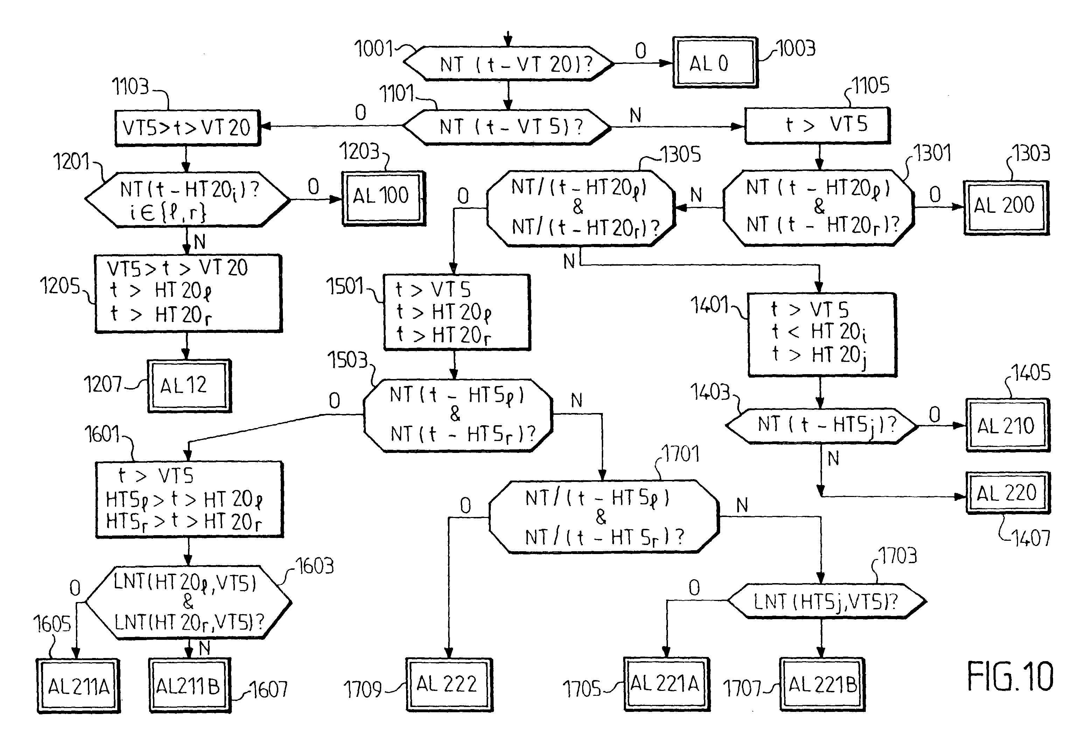

Pour éviter d'alourdir le dessin de la figure 10, qui représente le mécanisme de décision mis en oeuvre dans l'exemple décrit, il est fait appel à plusieurs fonctions relatives à des expressions de ce genre.

Le résultat de la fonction logique "Pas De Transition Négative", notée NT/(), est, pour un argument numérique "Arg" :

- OUI (Vrai) si le dernier passage par zéro de Arg est vers les valeurs positives, ou si Arg est toujours resté positif (depuis un temps origine adéquat) ;
- NON (Faux) si le dernier passage par zéro de Arg est vers les valeurs négatives ou si Arg est toujours resté négatif (depuis un temps origine adéquat).

Le temps origine peut être le début du vol, dont il est alors préférable de retirer le décollage proprement dit, phase d'envol sur la piste et juste après, par des critères tels que non contact du train d'atterrissage, ou rentrée du train, ou passage à 15 m de haut au-dessus du seuil de piste, par exemple.

La fonction NT() est l'opposé logique de la précédente, c'est-à-dire que la fonction NT() est fausse si NT/() est vraie, et réciproquement. Elle n'est utilisée que pour simplifier l'écriture des conditions de la figure 10.

Dans certaines parties du mécanisme de la figure 10, il est nécessaire de savoir quel est le plus récent parmi deux événements. Un événement sera la transition vers les valeurs positives (avec la définition ci-dessus) d'une expression de la forme (t - VT20).

La figure 10 utilise à cet effet, et à des fins illustratives seulement, une fonction LNT(), qui teste quel est le dernier événement rencontré parmi plusieurs. Par exemple, la fonction LNT(HT20,VT5) répond "oui" si le dernier événement rencontré est le passage aux valeurs positives de l'expression (t - VT5), et "non" si le dernier événement rencontré est le passage aux valeurs positives de l'expression (t - HT20).

Pour réaliser ce test, une façon de faire consiste à dater, jusqu'à un niveau de précision temporelle approprié, toutes les transitions rencontrées sur une période récente du vol de l'aéronef. Ceci peut d'ailleurs être un aménagement d'une fonction telle que NT(), qui donne en ce cas le premier résultat logique défini plus haut, et, en outre, comme second résultat l'instant auquel la dernière transition positive a été observée, et, par exemple, le temps origine en l'absence de toute transition.

A partir de là, la fonction LNT() est une simple comparaison des temps de deux événements.

D'autres façons de faire sont envisageables, comme par exemple prévoir un drapeau ("flag") qui resterait vrai (oui) tant que l'événement le plus récent est, dans l'exemple LNT(HT20,VT5), le passage de (t - VT5) à une valeur positive.

Il est maintenant fait référence à la figure 10. Le premier test 1001 détermine si l'on n'a jusqu'à présent rencontré aucun passage du point VT20, c'est-à-dire aucune transition positive de l'expression (t - VT20). Si oui, l'état obtenu en 1003 est l'état AL0, dont on verra qu'il représente l'absence d'alarme.

Dans le cas contraire (non), on passe au test 1101, qui détermine si l'on a passé le point VT5, c'est-à-dire si l'aéronef est ou non en présence d'un "risque vertical". Sur la sortie "oui" du test 1101, la situation est celle d'un prérisque vertical, comme illustré dans le bloc 1103. Dans ce cas, le test 1201 vise à déterminer si sur chacun des côtés gauche et droite de l'aéronef, on a franchi le point de prérisque latéral $HT20_i$. On note par l'indice i le côté concerné, i pouvant prendre l'une des valeurs gauche "$\ell$" ou droite "r". Si l'un au moins des points $HT20_i$ n'a pas été franchi, on passe à l'état 1203 ou AL100 (on verra qu'il peut être associé au même message que l'état AL0 d'absence d'alarme.

Dans le cas contraire, la situation (bloc 1205) comprend un prérisque vertical et deux pré-risques (ou risques) latéraux. Une alarme correspondante AL12 est alors émise en 1207.

On revient maintenant au test 1101. Son autre sortie "non" veut, comme indiqué en 1105, qu'un risque vertical soit rencontré, c'est-à-dire que le point VT5 est franchi. Dans ce cas, le test 1301 détermine si aucune transition positive n'a encore été observée aux points latéraux HT20, d'un côté ($\ell$) et de l'autre (r) du plan vertical de vol de l'aéronef. S'il n'y a aucun prérisque latéral, on prend en 1303 l'état AL200, qui pourra être le même que l'état AL0.

Dans le cas contraire, on passe au test 1305. (La fonction est NT/() et non NT() dans ce test 1305). Il recherche si le point HT20 a été franchi des deux côtés "$\ell$" et "r". compte tenu du test 1301, la réponse "non" du test 1305 signifie qu'un prérisque latéral (peut-être un risque latéral) a été rencontré de l'un et d'un seul des côtés du plan vertical, comme indiqué dans le bloc d'état 1401. Ce côté est noté par l'indice j, j pouvant prendre l'une des valeurs ($\ell$) pour la gauche et (r) pour la droite.

Le test 1403 détermine alors si, du côté j considéré, on a rencontré un risque latéral, par l'expression NT/(t-$HT5_j$). La sortie "oui" indique que l'on est en prérisque latéral d'un seul côté, et l'alarme indiquée est alors AL210 (bloc 1405), avec des messages sur lesquels on reviendra plus loin. Dans le cas contraire, il s'agit d'un risque latéral d'un seul côté, ce qui produit en 1407 l'état AL220.

On revient maintenant à l'autre sortie (oui) du test 1305. Dans ce cas (bloc 1501), la situation est celle d'un risque vertical et de prérisques des deux côtés (qui peuvent être des risques).

Le test 1503 détermine si les deux fonctions NT(t-$HT5_\ell$) et NT(t-$HT5_r$) répondent "oui", c'est-à-dire si l'on reste au niveau d'un prérisque des deux côtés. Si oui, il s'agit seulement d'un risque vertical et d'un prérisque des deux côtés (bloc d'état 1601). Dans ce cas, le test 1603 détermine si la plus récente transition rencontrée a été celle relative au plan vertical, c'est-à-dire le risque vertical. Si oui, on produit une alarme AL211A au bloc 1605. Dans le cas contraire, on produit une alarme AL211B au bloc 1607.

A l'autre sortie du test 1503 ("non"), on est allé jusqu'au risque latéral, d'un côté au moins du plan vertical. Le test 1701 détermine si l'on est allé jusqu'au risque latéral des deux côtés du plan vertical de l'aéronef. Si cette condition n'est pas vérifiée, c'est-à-dire qu'il y a un prérisque d'un côté et un risque de l'autre côté (noté j), on détermine au test 1703 si le dernier événement rencontré a été celui du risque vertical, c'est-à-dire celui relatif au risque vertical. Si oui, on produit l'alarme AL221A à l'unité 1705. Sinon, c'est l'alarme AL221B de l'unité 1707 qui est engendrée.

Enfin, pour l'autre sortie du test 1701, on est en présence d'un risque vertical et d'un risque bilatéral, et l'alarme, qui correspond en l'espèce au risque maximum, est désignée par AL222 dans le bloc 1709.

La figure 10 a ainsi permis de décrire le mécanisme général de transition des différentes situations, sans risque, prérisque, risque, et ce pour vertical, latéral gauche, latéral droit.

Les messages adressés au pilote sont susceptibles de différentes options générales. On décrira maintenant des exemples préférentiels de celles-ci, en référence au tableau I annexé à la fin de la présente description.

En première colonne, le tableau 1 reprend les symboles des alarmes dans la figure 10. Les trois colonnes qui suivent rappellent les états correspondants, respectivement dans l'axe, du côté à risque maximum, et de l'autre côté. En cinquième colonne apparaissent les messages prévus selon l'art antérieur.

Les trois dernières colonnes définissent respectivement les options 1, 2 et 3 pour les messages affichés au pilote selon un exemple de mise en oeuvre de l'invention. Ces messages sont en anglais, comme il est d'usage en aviation civile. Une traduction en français en est fournie ici:

| ANGLAIS | FRANÇAIS |
|---|---|
| Caution terrain (ahead) | Alerte terrain (devant) |
| Pull Up | Monter |
| Avoid terrain | Evitement terrain |

Les états d'absence d'alarme AL0, AL100 et AL200 ne donnent naturellement lieu à aucun message.

L'état AL12 correspond à un prérisque vertical et à un prérisque unilatéral (au moins). Dans ce cas, les trois options prévoient que l'on envoie au pilote un message l'informant d'un risque avec le terrain.

L'état AL210 est celui d'un risque vertical et d'un prérisque unilatéral, qui également ne donne lieu à aucun message dans les options 1 et 2. L'option 3 prévoit que l'on informe le pilote d'un prérisque vertical par l'alarme indiquée.

L'état AL220 est celui d'un risque vertical et d'un risque unilatéral, sans pré-risque de l'autre côté. Dans les trois options, le message envoyé informe le pilote du risque vertical.

Les états AL211A et AL211B sont celui d'un risque vertical et d'un prérisque bilatéral. L'option 2 ne fait pas de différence, et on voit dans les deux cas le message de prérisque vertical. Par contre, les options 1 et 3 distinguent suivant que la transition la plus récente s'est produite au niveau du risque vertical, auquel cas on envoie au pilote un message l'invitant à cabrer ("pull up"); dans le cas contraire où l'événement le plus récent est le prérisque bilatéral, on envoie au pilote un message l'invitant à une évasive latérale ("avoid terrain").

Les états AL221A et AL221B ont en commun le fait qu'il s'agit d'un risque vertical, d'un risque unilatéral, et d'un pré-risque de l'autre côté. Dans les deux cas, les options 2 et 3 prévoient que l'on adresse au pilote un message de prérisque vertical ("caution terrain ahead"). Selon l'option 1, une invite d'urgence est délivrée au pilote pour:

- en l'état AL221A, faire une évasive verticale, ou
- en l'état AL221B, faire une évasive latérale.

Enfin, le dernier état AL222 est celui d'un risque vertical et d'un risque bilatéral. Dans ce cas, l'option 1 invite le pilote à cabrer d'urgence. Les options 2 et 3 l'invitent à une évasive latérale d'urgence.

Dans ce qui précède, l'expression "évasive latérale" vise la possibilité de cercler en montant pour gagner de l'altitude afin d'échapper à des reliefs dangereux situés dans l'axe de la trajectoire prédite, de la manière indiquée plus haut.

Le choix entre les différentes options est effectué a priori et dépendra notamment des considérations suivantes :

- capacités de manoeuvres de l'aéronef,

- définition des paramètres principaux du système anticollision, et notamment des valeurs effectives des temps VT5, VT20, ainsi que HT5 et HT20. Au passage, il est à noter que les temps ne sont pas nécessairement les mêmes des deux côtés de l'aéronef, bien que l'identité de ces temps soit actuellement considérée comme largement préférable.

- prédéfinition en début de vol(s), compte tenu de cas particuliers que l'aéronef peut rencontrer, notamment à l'approche de son ou ses aéroports de destination ou d'escale.

Bien entendu, ni les messages d'alarme, ni les conditions pour appliquer ceux-ci, telles qu'elles viennent d'être définies en référence à la figure 10 et au tableau I, ne sont limitatives. Les alarmes peuvent être détaillées ou complétées de façon plus générale, par exemple comme déjà décrit en fonction de considérations sur le plus récent des événements rencontrés, ou de plusieurs des événements rencontrés plus récents, ou sur d'autres conditions applicables à ces événements.

Par exemple, à l'état AL220, on peut envisager d'émettre une alarme verticale "pull up", au lieu de la pré-alarme "caution terrain ahead". On peut, dans d'autres cas, utiliser les messages prévus selon l'art antérieur, mais après avoir pris en considération les conditions supplémentaires ajoutées selon la présente invention.

Les messages d'alarme eux-mêmes ne sont pas limitatifs.

Dans les exemples donnés au tableau I, les messages d'invitation à évitement latéral n'indiquent pas de quel côté le pilote doit aller. Il est bien entendu concevable de l'informer plus complètement, en lui indiquant notamment que l'évasive est impossible à gauche ("left side terrain unclear"), ou bien à droite (right side terrain unclear") par décomposition par exemple, de l'état AL100.

Par ailleurs, il est envisageable aussi d'ajouter un niveau de "pré-pré-risque", donné au pilote à titre d'information ("advisory").

TABLEAU I

| SYMB | VERTI-CAL | COTE 1 | COTE 2 | ART ANTE-RIEUR | OPTION 1 | OPTION 2 | OPTION 3 |
|---|---|---|---|---|---|---|---|
| AL0 | - | - | - | - | - | - | - |
| AL100 | Pré-risque | - | - | "Caution terrain ahead" | - | - | - |
| AL12 | Pré-risque | Pré-risque ou risque | Pré-risque ou risque | "Caution terrain ahead" | "Caution terrain" | "Caution terrain" | "Caution terrain" |
| AL200 | Risque | - | - | "Pull Up" | - | - | - |
| AL210 | Risque | Pré-risque | - | "Pull up" | - | - | "Caution terrain ahead" |
| AL220 | Risque | Risque | - | "Pull up" | "Caution terrain ahead" | "Caution terrain ahead" | "Caution terrain ahead" |
| AL211A | Risque + récent | Pré-risque | Pré-risque | "Pull up" | "Pull up" | "Caution terrain ahead" | "Pull up" |
| AL211B | Risque - récent | Pré-risque | Pré-risque | "Pull up" | "Avoid terrain" | "Caution terrain ahead" | "Avoid terrain" |
| AL221A | Risque +récent | Risque | Pré-risque | "Pull up" | "Pull up" | "Caution terrain ahead" | "Caution terrain ahead" |
| AL221B | Risque - récent | Risque | Pré-risque | "Pull up" | "Avoid terrain" | "Caution terrain ahead" | "Caution terrain ahead" |
| AL222 | Risque | Risque | Risque | "Pull up" | "Pull up" | "Avoid terrain" | "Avoid terrain" |

EP 0 802 469 B1

**EP 0 802 469 B1**

**Revendications**

1. Dispositif d'aide à la navigation et à la sécurité aériennes, du type comportant :

   - une entrée (2) pour recevoir des indications d'état, propres à permettre une prédiction de la trajectoire de l'aéronef,
   - une mémoire de travail (3,40), propre à contenir une carte altimétrique locale, à partir de laquelle est définissable une enveloppe en altitude du terrain, au voisinage de l'aéronef,
   - de premiers moyens de prédiction de trajectoire (411), pour établir, à partir desdites indications d'état et de paramètres choisis de vol dans la surface verticale contenant l'axe de sa trajectoire, une trajectoire limite verticale de l'aéronef,
   - de premiers moyens de comparaison (421) pour faire une première comparaison entre cette trajectoire limite verticale et la partie correspondante de l'enveloppe en altitude, pour déterminer un risque de collision vertical avec le sol, et
   - des moyens d'alarme (5) pour établir au moins un état d'alarme, en fonction du résultat de la première comparaison,

   caractérisé en ce qu'il comporte en outre:

   - de seconds moyens de prédiction (412) pour établir, à partir desdites indications d'état et de paramètres choisis, une trajectoire limite latérale de l'aéronef, d'un côté de la verticale de la trajectoire de vol,
   - de seconds moyens de comparaison (422) pour faire une seconde comparaison entre cette trajectoire limite latérale et la partie correspondante de l'enveloppe en altitude,

   et en ce que les moyens d'alarme (5) sont agencés pour modifier l'un au moins des états d'alarme relatifs à la première comparaison, si les seconds moyens de comparaison n'indiquent pas de risque de collision avec le sol.

2. Dispositif selon la revendication 1, caractérisé en ce que la trajectoire limite latérale correspond à un virage à 360°, pour revenir vers le même point de mise en virage, sans perte d'altitude autre que celle nécessaire à une éventuelle mise en palier horizontal.

3. Dispositif selon l'une des revendications 1 et 2, caractérisé en ce qu'il comprend:

   - de troisièmes moyens de prédiction (413) pour établir, à partir desdites indications d'état et de paramètres choisis de vol, une autre trajectoire limite latérale de l'aéronef, de l'autre côté de la verticale,
   - de troisièmes moyens de comparaison (423) pour faire une troisième comparaison entre cette autre trajectoire limite latérale et la partie correspondante de l'enveloppe en altitude,

   et en ce que les moyens d'alarme (5) sont agencés pour modifier ou inhiber l'état d'alarme relatif à la première comparaison qui indique le risque maximum, au moins dans le cas où à la fois les seconds et les troisièmes moyens de comparaison n'indiquent pas de risque de collision latérale avec le sol (1303).

4. Dispositif selon la revendication 3, caractérisé en ce que les moyens d'alarme sont agencés pour modifier ou inhiber celle des alarmes relatives à la première comparaison qui indique le risque maximum, si l'une des secondes comparaisons n'indique pas de risque de collision latérale avec le sol (1303,1405).

5. Dispositif selon l'une des revendications précédentes, dans lequel:

   - les premiers moyens de prédiction sont agencés pour établir deux trajectoires limites verticales, respectivement à moyen terme et à court terme,
   - les premiers moyens de comparaison sont agencés pour opérer deux premières comparaisons, entre ces deux trajectoires limites verticales et les parties correspondantes de l'enveloppe en altitude, pour déterminer un pré-risque de collision-sol verticale, et un risque de collision-sol verticale, respectivement,
   - et les moyens d'alarme sont agencés pour émettre une préalarme verticale et une alarme verticale, respectivement en fonction dudit pré-risque et dudit risque,

   caractérisé en ce que les moyens d'alarme sont agencés pour modifier ou inhiber la préalarme verticale, au moins dans le cas où à la fois les seconds et les troisièmes moyens de comparaison n'indiquent pas de risque de collision-sol latérale (1203).

6. Dispositif selon la revendication 5, caractérisé en ce que les moyens d'alarme sont agencés pour modifier ou inhiber la préalarme verticale, si l'un des seconds et troisièmes moyens de comparaison n'indique pas de risque de collision-sol latérale (1207).

7. Dispositif selon l'une des revendications 5 et 6, caractérisé en ce que les moyens d'alarme sont agencés pour modifier ou inhiber l'alarme verticale, si à la fois les seconds et les troisièmes moyens de comparaison n'indiquent pas de risque de collision-sol latérale (1303,1405).

8. Dispositif selon l'une des revendications 5 à 7, caractérisé en ce que les seconds et les troisièmes moyens de prédiction sont agencés pour établir chacun deux trajectoires limites latérales, respectivement à moyen terme et à court terme, et respectivement de part et d'autre de la verticale,

   en ce que les seconds moyens de comparaison sont agencés pour opérer deux secondes comparaisons, entre les trajectoires limites latérales à moyen terme et à court terme issues des seconds moyens de prédiction, et les parties correspondantes de l'enveloppe en altitude, pour déterminer, d'un côté de la verticale, un pré-risque de collision-sol latérale, et un risque de collision-sol latérale, respectivement,
   en ce que les troisièmes moyens de comparaison sont agencés pour opérer deux troisièmes comparaisons, entre les trajectoires limites latérales à moyen terme et à court terme issues des troisièmes moyens de prédiction, et les parties correspondantes de l'enveloppe en altitude, pour déterminer, de l'autre côté de la verticale, un pré-risque de collision-sol latérale, et un risque de collision-sol latérale, respectivement,
   et en ce que les moyens d'alarme prennent comme condition d'absence de risque de collision-sol latérale le fait qu'à la fois les seconds et troisièmes moyens de comparaisons n'indiquent pas de pré-risque de collision-sol latérale (1303).

9. Dispositif selon la revendication 8, caractérisé en ce que les moyens d'alarme sont agencés pour émettre une préalarme verticale en cas de pré-risque de collision-sol verticale et de pré-risque de collision-sol latérale d'un côté (1207).

10. Dispositif selon la revendication 8, caractérisé en ce que les moyens d'alarme sont agencés pour n'émettre aucune alarme en cas d'absence de pré-risque de collision-sol latérale des deux côtés (1203).

11. Dispositif selon l'une des revendications 8 à 10, caractérisé en ce que les moyens d'alarme sont agencés pour n'émettre aucune alarme en cas de risque de collision-sol verticale, mais en l'absence de pré-risque de collision-sol latérale des deux côtés (1303).

12. Dispositif selon l'une des revendications 8 à 11, caractérisé en ce que les moyens d'alarme sont agencés pour n'émettre aucune alarme en cas de risque de collision-sol verticale, dès lors qu'un pré-risque de collision-sol latérale n'existe que d'un seul côté (1405).

13. Dispositif selon l'une des revendications 8 à 12, caractérisé en ce que les moyens d'alarme sont agencés pour émettre une pré-alarme verticale en cas de risque de collision-sol verticale, dès lors qu'un pré-risque de collision-sol latérale n'existe que d'un seul côté (1405).

14. Dispositif selon l'une des revendications 8 à 13, caractérisé en ce que les moyens d'alarme sont agencés pour émettre une pré-alarme verticale en cas de risque de collision-sol verticale, dès lors qu'un risque de collision-sol latérale n'existe que d'un seul côté (1407).

15. Dispositif selon l'une des revendications 8 à 14, caractérisé en ce que les moyens d'alarme sont agencés pour émettre une pré-alarme verticale, en cas de risque de collision-sol verticale et de pré-risque de collision-sol latérale des deux côtés (1607,1608).

16. Dispositif selon l'une des revendications 8 à 14, caractérisé en ce que les moyens d'alarme sont agencés pour émettre, en cas de risque de collision-sol verticale et de pré-risque de collision-sol latérale des deux côtés, une alarme verticale si le plus récent est le risque de collision-sol verticale (1607), sinon une alarme latérale (1608).

17. Dispositif selon l'une des revendications 8 à 16, caractérisé en ce que les moyens d'alarme sont agencés pour émettre une pré-alarme verticale, en cas de risque de collision-sol verticale, de pré-risque de collision-sol latérale d'un côté, et de risque de collision-sol latérale de l'autre côté (1705,1707).

18. Dispositif selon l'une des revendications 8 à 16, caractérisé en ce que les moyens d'alarme sont agencés pour émettre, en cas de risque de collision-sol verticale, de pré-risque de collision-sol latérale d'un côté, et de risque de collision-sol latérale de l'autre côté, une alarme verticale si le plus récent est le risque de collision-sol verticale (1705), sinon une alarme latérale (1707).

19. Dispositif selon l'une des revendications 8 à 18, caractérisé en ce que les moyens d'alarme sont agencés pour émettre une alarme verticale, en cas de risque de collision-sol verticale, ainsi que de risque de collision-sol latérale de deux côtés (1709).

20. Dispositif selon l'une des revendications 8 à 19, caractérisé en ce que les moyens d'alarme sont agencés pour émettre une alarme latérale, en cas de risque de collision-sol verticale, ainsi que de risque de collision-sol latérale de deux côtés (1709).

**Claims**

1. Device for aiding aerial navigation and aerial safety, of the type comprising:

   - an input (2) for receiving status indications, suitable for allowing a prediction of the trajectory of the aircraft,
   - a work memory (3, 40), suitable for containing a local altimetric map, from which can be defined an altitude envelope for the terrain, in the vicinity of the aircraft,
   - first means of trajectory prediction (411), for establishing, from the said status indications and flight parameters chosen in the vertical surface containing the axis of its trajectory, a vertical limit trajectory of the aircraft,
   - first means of comparison (421) for making a first comparison between this vertical limit trajectory and the corresponding part of the altitude envelope, so as to determine a risk of vertical collision with the ground, and
   - means of alarm (5) for establishing at least one alarm status, as a function of the result of the first comparison,

   characterized in that it furthermore comprises:

   - second means of prediction (412) for establishing, from the said status indications and chosen parameters, a lateral limit trajectory of the aircraft, on one side of the vertical of the flight trajectory,
   - second means of comparison (422) for making a second comparison between this lateral limit trajectory and the corresponding part of the altitude envelope,

   and in that the means of alarm (5) are configured so as to modify one at least of the alarm statuses relating to the first comparison, if the second means of comparison do not indicate any risk of collision with the ground.

2. Device according to Claim 1, characterized in that the lateral limit trajectory corresponds to a 360° turn, so as to come back to the same start-of-turn point, without loss of altitude other than that required for any horizontal levelling-off.

3. Device according to either of Claims 1 and 2,
   characterized in that it comprises:

   - third means of prediction (413) for establishing, from the said status indications and chosen flight parameters, another lateral limit trajectory of the aircraft, on the other side of the vertical,
   - third means of comparison (423) for making a third comparison between this other lateral limit trajectory and the corresponding part of the altitude envelope,

   and in that the means of alarm (5) are configured so as to modify or disable the alarm status relating to the first comparison which indicates the maximum risk, at least in the case where both the second and the third means of comparison do not indicate any risk of lateral collision with the ground (1303).

4. Device according to Claim 3, characterized in that the alarm means are configured so as to modify or disable that one of the alarms relating to the first comparison which indicates the maximum risk, if one of the second comparisons does not indicate any risk of lateral collision with the ground (1303, 1405).

5. Device according to one of the preceding claims, in which:

- the first means of prediction are configured so as to establish two, respectively medium-term and short-term, vertical limit trajectories,
- the first means of comparison are configured so as to effect two first comparisons, between these two vertical limit trajectories and the corresponding parts of the altitude envelope, so as to determine a pre-risk of vertical ground-collision and a risk of vertical ground-collision, respectively,
- and the means of alarm are configured so as to emit a vertical pre-alarm and a vertical alarm, respectively as a function of the said pre-risk and of the said risk,

characterized in that the means of alarm are configured so as to modify or disable the vertical pre-alarm, at least in the case where both the second and third means of comparison do not indicate any risk of lateral ground-collision (1203).

6. Device according to Claim 5, characterized in that the means of alarm are configured so as to modify or disable the vertical pre-alarm, if one of the second and third means of comparison does not indicate any risk of lateral ground-collision (1207).

7. Device according to either of Claims 5 and 6, characterized in that the means of alarm are configured so as to modify or disable the vertical alarm, if both the second and the third means of comparison do not indicate any risk of lateral ground-collision (1303, 1405) .

8. Device according to one of Claims 5 to 7, characterized in that the second and third means of prediction are configured so as to each establish two, respectively medium-term and short-term, lateral limit trajectories on either side of the vertical respectively,

in that the second means of comparison are configured so as to effect two second comparisons, between the medium-term and short-term lateral limit trajectories emanating from the second means of prediction, and the corresponding parts of the altitude envelope, so as to determine, on one side of the vertical, a pre-risk of lateral ground-collision, and a risk of lateral ground-collision, respectively, in that the third means of comparison are configured so as to effect two third comparisons, between the medium-term and short-term lateral limit trajectories emanating from the third means of prediction, and the corresponding parts of the altitude envelope, so as to determine, on the other side of the vertical, a pre-risk of lateral ground-collision, and a risk of lateral ground-collision, respectively, and in that the means of alarm take as condition of absence of risk of lateral ground-collision the fact that both the second and third means of comparison do not indicate any pre-risk of lateral ground-collision (1303).

9. Device according to Claim 8, characterized in that the means of alarm are configured so as to emit a vertical pre-alarm in the event of pre-risk of vertical ground-collision and of pre-risk of lateral ground-collision on one side (1207).

10. Device according to Claim 8, characterized in that the means of alarm are configured so as not to emit any alarm in the event of absence of pre-risk of lateral ground-collision on both sides (1203).

11. Device according to one of Claims 8 to 10, characterized in that the means of alarm are configured so as not to emit any alarm in the event of risk of vertical ground-collision, but in the absence of pre-risk of lateral ground-collision on both sides (1303).

12. Device according to one of Claims 8 to 11, characterized in that the means of alarm are configured so as not to emit any alarm in the event of risk of vertical ground-collision, as soon as a pre-risk of lateral ground-collision exists on one side only (1405).

13. Device according to one of Claims 8 to 12, characterized in that the means of alarm are configured so as to emit a vertical pre-alarm in the event of risk of vertical ground-collision, as soon as a pre-risk of lateral ground-collision exists on one side only (1405).

14. Device according to one of Claims 8 to 13,

characterized that the means of alarm are configured so as to emit a vertical pre-alarm in the event of risk of vertical ground-collision, as soon as a risk of lateral ground-collision exists on one side only (1407).

15. Device according to one of Claims 8 to 14,
characterized in that the means of alarm are configured so as to emit a vertical pre-alarm, in the event of risk of vertical ground-collision and of pre-risk of lateral ground-collision on both sides (1607, 1608).

16. Device according to one of Claims 8 to 14,
characterized in that the means of alarm are configured so as to emit, in the event of risk of vertical ground-collision and of pre-risk of lateral ground-collision on both sides, a vertical alarm if the most recent is the risk of vertical ground-collision (1607), otherwise a lateral alarm (1608).

17. Device according to one of Claims 8 to 16,
characterized in that the means of alarm are configured so as to emit a vertical pre-alarm, in the event of risk of vertical ground-collision, of pre-risk of lateral ground-collision on one side, and of risk of lateral ground-collision on the other side (1705, 1707) .

18. Device according to one of Claims 8 to 16,
characterized in that the means of alarm are configured so as to emit, in the event of risk of vertical ground-collision, of pre-risk of lateral ground-collision on one side, and of risk of lateral ground-collision on the other side, a vertical alarm if the most recent is the risk of vertical ground-collision (1705), otherwise a lateral alarm (1707).

19. Device according to one of Claims 8 to 18,
characterized in that the means of alarm are configured so as to emit a vertical alarm, in the event of risk of vertical ground-collision, as well as of risk of lateral ground-collision on two sides (1709).

20. Device according to one of Claims 8 to 19,
characterized in that the means of alarm are configured so as to emit a lateral alarm, in the event of risk of vertical ground-collision, as well as of risk of lateral ground-collision on two sides (1709).

**Patentansprüche**

1. Vorrichtung zur Flugnavigationshilfe und zur Flugsicherheit, enthaltend:

    - einen Eingang (2) zur Aufnahme von Zustandsangaben, die dazu geeignet sind, eine Kursvorhersage des Flugzeugs zu erlauben,

    - einen Arbeitsspeicher (3, 40), der dazu geeignet ist, eine örtliche Höhenkarte aufzunehmen, auf deren Grundlage ein Höhenbild des Geländes in Nachbarschaft des Flugzeugs definierbar ist,

    - erste Flugbahnvorhersageeinrichtungen (411), um aus den genannten Zustandsangaben und aus gewählten Flugparametern in der vertikalen Oberfläche, die die Achse seiner Flugbahn enthält, eine Vertikal-Grenzflugbahn des Flugzeugs festzulegen,

    - erste Vergleichseinrichtungen (421), um einen ersten Vergleich zwischen dieser Vertikal-Grenzflugbahn und dem entsprechenden Teil des Höhenbildes anzustellen, um das Risiko einer vertikalen Kollisionsrisiko mit dem Boden zu bestimmen, und

    - Alarmeinrichtungen (5), um wenigstens einen Alarmzustand in Abhängigkeit von dem Ergebnis des ersten Vergleichs zu erzeugen,

    - dadurch gekennzeichnet, daß sie weiterhin enthält:

        - zweite Vorhersageeinrichtungen (412), um aus den genannten Zustandsangaben und gewählten Parametern eine Lateral-Grenzflugbahn des Flugzeugs zu einer Seite der Vertikalen der Flugbahn festzulegen,

        - zweite Vergleichseinrichtungen (422) zur Durchführung eines zweiten Vergleichs zwischen dieser Lateral-

17

Grenzflugbahn und dem entsprechenden Teil des Höhenbildes,

und daß die Alarmeinrichtungen (5) dazu eingerichtet sind, wenigstens einen der Alarmzustände, die sich auf den ersten Vergleich beziehen, zu modifizieren, wenn die zweiten Vergleichseinrichtungen kein Risiko einer Kollision mit dem Boden anzeigen.

2. Vorrichtung nach Anspruch 1, dadurch gekennzeichnet, daß die Lateral-Grenzflugbahn einer Kurve von 360° entspricht, um ohne Höhenverlust außer jenem, der bei einer eventuellen horizontalen Normalfluglage unabwendbar ist, zum selben Ausgangspunkt des Kurvenflugs zurückzukehren.

3. Vorrichtung nach einem der Ansprüche 1 und 2, dadurch gekennzeichnet, daß sie enthält:

- dritte Vorhersageeinrichtungen (413), um auf der Grundlage der Zustansangaben und der gewählten Flugparameter eine andere laterale Grenzflugbahn des Flugzeugs auf der anderen Seite der Vertikalen anzugeben,

- dritte Vergleichseinrichtungen (423) zur Ausführung eines dritten Vergleichs zwischen dieser anderen Latera-Grenzflugbahn und dem entsprechenden Teil des Höhenbildes,

und daß die Alarmeinrichtungen (5) dazu eingerichtet sind, den Alarmzustand, der sich auf den ersten Vergleich bezieht, der das Maximalrisiko angibt, wenigstens im Falle, daß die zweiten und dritten Vergleichseinrichtungen gleichzeitig kein Risiko einer lateralen Kollision mit dem Boden (1303) anzeigen, zu modifizieren oder zu sperren.

4. Vorrichtung nach Anspruch 3, dadurch gekennzeichnet, daß die Alarmeinrichtungen dazu eingerichtet sind, jenen der Alarme, die sich auf den ersten Vergleich beziehen, der das Maximalrisiko angibt, zu modifizieren oder zu sperren, wenn einer der zweiten Vergleiche kein Risiko einer lateralen Kollision mit dem Boden (1303, 1405) angibt.

5. Vorrichtung nach einem der vorhergehenden Ansprüche, bei der:

- die ersten Vorhersageeinrichtungen dazu eingerichtet sind, zwei vertikale Grenzflugbahnen im mittlerer Zeit bzw. kurzer Zeit anzugeben,

- die ersten Vergleichseinrichtungen dazu eingerichtet sind, zwei erste Vergleiche zwischen diesen beiden Vertikal-Grenzflugbahnen und den entsprechenden Teilen des Höhenbildes auszuführen, um ein Vor-Risiko einer vertikalen Kollision mit dem Boden bzw. ein Risiko einer vertikalen Kollision mit dem Boden zu bestimmen, und

- die Alarmeinrichtungen dazu eingerichtet sind, einen Vertikal-Voralarm bzw. einen Vertikal-Alarm in Abhängigkeit von dem genannten Vor-Risiko und dem genannten Risiko anzugeben,

dadurch gekennzeichnet, daß die Alarmeinrichtungen dazu eingerichtet sind, den Vertikal-Voralarm wenigstens im Falle, daß gleichzeitig die zweiten und dritten Vergleichseinrichtungen kein Risiko einer lateralen Kollision mit dem Boden angeben, zu modifizieren oder zu sperren.

6. Vorrichtung nach Anspruch 5, dadurch gekennzeichnet, daß die Alarmeinrichtungen dazu eingerichtet sind, den Vertikal-Voralarm zu modifizieren oder zu sperren, wenn eine der zweiten und dritten Vergleichseinrichtungen kein Risiko einer lateralen Kollision mit dem Boden (1207) angibt.

7. Vorrichtung nach einem der Ansprüche 5 und 6, dadurch gekennzeichnet, daß die Alarmeinrichtungen dazu eingerichtet sind, den Vertikal-Alarm zu modifizieren oder zu sperren, wenn die zweiten und dritten Vergleichseinrichtungen gleichzeitig kein Risiko einer lateralen Kollision mit dem Boden (1303, 1405) angeben.

8. Vorrichtung nach einem der Ansprüche 5 bis 7, dadurch gekennzeichnet,

daß die zweiten und dritten Vorhersageeinrichtungen dazu eingerichtet sind, jeweils zwei Lateral-Grenzflugbahnen in mittlerer Zeit bzw. kurzer Zeit beiderseits der Vertikalen festzulegen,

und daß die zweiten Vergleichseinrichtungen dazu eingerichtet sind, zwei zweite Vergleiche zwischen den Lateral-Grenzflugbahnen in mittlerer Zeit und kurzer Zeit, die von den zweiten Vorhersageeinrichtungen abgegeben werden, und den entsprechenden Abschnitten des Höhenbildes auszuführen, um auf einer Seite der Vertikalen ein Vor-Risiko einer lateralen Kollision mit dem Boden bzw. ein Risiko einer lateralen Kollision mit dem Boden zu bestimmen,

daß die dritten Vergleichseinrichtungen dazu eingerichtet sind, zwei dritte Vergleiche zwischen den Lateral-Grenzflugbahnen in mittlerer Zeit bzw. kurzer Zeit, die von den dritten Vorhersageeinrichtungen abgegeben werden, und den entsprechenden Abschnitten des Höhenbildes auszuführen, um auf der anderen Seite der Vertikalen ein Vor-Risiko einer lateralen Kollision mit dem Boden bzw. ein Risiko einer lateralen Kollision mit dem Boden zu bestimmen,

und daß die Alarmeinrichtungen als Bedingung für das Fehlen eines Risikos einer lateralen Kollision mit dem Boden die Tatsache werten, daß die zweiten und dritten Vergleichseinrichtungen gleichzeitig kein Vorrisiko einer lateralen Kollision mit dem Boden (1303) anzugeben.

9. Vorrichtung nach Anspruch 8, dadurch gekennzeichnet, daß die Alarmeinrichtungen dazu eingerichtet sind, einen Vertikal-Voralarm im Falle eines Vor-Risikos einer vertikalen Kollision mit dem Boden und eines Vorrisikos einer lateralen Kollision auf einer Seite mit dem Boden (1207) abzugeben.

10. Vorrichtung nach Anspruch 8, dadurch gekennzeichnet, daß die Alarmeinrichtungen dazu eingerichtet sind, keinerlei Alarm im Falle des Fehlens eines Vor-Risikos einer lateralen Kollision mit dem Boden zu beiden Seiten (503) abzugeben.

11. Vorrichtung nach einem der Ansprüche 8 bis 10, dadurch gekennzeichnet, daß die Alarmeinrichtungen dazu eingerichtet sind, keinerlei Alarm im Falle eines Risikos einer vertikalen Kollision mit dem Boden, aber bei Fehlens eines Vor-Risikos einer lateralen Kollision mit dem Boden zu beiden Seiten (1303) abzugeben.

12. Vorrichtung nach einem der Ansprüche 8 bis 11, dadurch gekennzeichnet, daß die Alarmeinrichtungen dazu eingerichtet sind, keinerlei Alarm im Falle eines Risikos einer vertikalen Kollision mit dem Boden abzugeben, sobald ein Vor-Risiko einer lateralen Kollision mit dem Boden nur auf einer einzigen Seite (1405) existiert.

13. Vorrichtung nach einem der Ansprüche 8 bis 12, dadurch gekennzeichnet, daß die Alarmeinrichtungen dazu eingerichtet sind, einen Vertikal-Voralarm im Falle eines Risikos einer vertikalen Kollision mit dem Boden abzugeben, sobald ein Vor-Risiko einer lateralen Kollision mit dem Boden nur auf einer einzigen Seite (1405) existiert.

14. Vorrichtung nach einem der Ansprüche 8 bis 13, dadurch gekennzeichnet, daß die Alarmeinrichtungen dazu eingerichtet sind, einen Vertikal-Voralarm im Falle eines Risikos einer vertikalen Kollision mit dem Boden abzugeben, sobald ein Risiko einer lateralen Kollision mit dem Boden nur auf einer einzigen Seite (1407) existiert.

15. Vorrichtung nach einem der Ansprüche 8 bis 14, dadurch gekennzeichnet, daß die Alarmeinrichtungen dazu eingerichtet sind, einen Vertikal-Voralarm im Falle eines Risikos einer vertikalen Kollision mit dem Boden und eines Vor-Risikos einer lateralen Kollision mit dem Boden zu beiden Seiten (1607, 1608) abzugeben.

16. Vorrichtung nach einem der Ansprüche 8 bis 14, dadurch gekennzeichnet, daß die Alarmeinrichtungen dazu eingerichtet sind, im Falle eines Risikos einer vertikalen Kollision mit dem Boden und eines Vor-Risikos einer lateralen Kollision mit dem Boden zu beiden Seiten einen Vertikal-Alarm abzugeben, wenn das jüngste das Risiko der vertikalen Kollision mit dem Boden (1607) ist, und wenn nicht, einen Lateral-Alarm abzugeben (1608).

17. Vorrichtung nach einem der Ansprüche 8 bis 16, dadurch gekennzeichnet, daß die Alarmeinrichtungen dazu eingerichtet sind, einen Vertikal-Voralarm im Falle eines Risikos einer vertikalen Kollision mit dem Boden und eines Vorrisikos einer lateralen Kollision mit dem Boden auf einer Seite und eines Risikos einer lateralen Kollision mit dem Boden auf der anderen Seite (1705, 1707) abzugeben.

18. Vorrichtung nach einem der Ansprüche 8 bis 16, dadurch gekennzeichnet, daß die Alarmeinrichtungen dazu eingerichtet sind, im Falle eines Risikos einer vertikalen Kollision mit dem Boden, eines Vorrisikos einer lateralen Kollision mit dem Boden auf einer Seite und des Risikos einer lateralen Kollision mit dem Boden auf der anderen Seite einen Vertikal-Alarm abzugeben, wenn das jüngste das Risiko einer vertikalen Kollision mit dem Boden (1705) ist, und wenn nicht, einen Lateral-Alarm (1707) abzugeben.

**19.** Vorrichtung nach einem der Ansprüche 8 bis 18, dadurch gekennzeichnet, daß die Alarmeinrichtungen dazu eingerichtet sind, einen Vertikal-Alarm im Falle des Risikos einer vertikalen Kollision mit dem Boden sowie des Risikos einer lateralen Kollision mit dem Boden auf beiden Seiten (1709) abzugeben.

**20.** Vorrichtung nach einem der Ansprüche 8 bis 19, dadurch gekennzeichnet, daß die Alarmeinrichtungen dazu eingerichtet sind, einen Lateral-Alarm im Falle des Risikos einer vertikalen Kollision mit dem Boden sowie des Risikos einer lateralen Kollision mit dem Boden auf beiden Seiten (1709) abzugeben.

2

Paramètres de vol
consolidés

3

Fichier
Terrain

4

Calculs
d'Anticollision

S1
Alarmes

S3
Directeur d'ordres

FIG.1

FIG. 2

**Antenne GPS** — 21
**Antenne RA** — 22

GPS
Radio-altimètre

$L_1, G_1, Z_1$
HRS

20 — CENTRALE INERTIELLE (INU)
Validation — 25

$L\phi, G\phi, Z\phi$

$\vec{v}$
$\vec{y}$

28 — Extrapolation

$L_2, G_2, Z_2$
LGZ validité et permanents par INU($p_2$)

4 — Calculs d'anticollision
LGZ
Profil survolé extrait du Fichier — 70
Profil réellement survolé — 71

ALARMES

VAL. NAV.

Comparaison des profils — 72_79

Validation des paramètres de navigation

$p$ = périodicité de renouvellement de l'information
$p_1$ = quelques secondes à quelques minutes
$p_2$ = ordre de la seconde

FIG. 3

EP 0 802 469 B1

Fichier

MDF (79)

**10** Système de Remplissage et Mise à jour

Interface de Mise à jour ⌐32

Base de données (relatif) 5 bits ⌐3

Au sol

**12** Adaptation à un avion donné

Gestion de la base de données ⌐35

Décompression des données ⌐37 ⌐30

LGZ }(6)
(7)

Radio-altimètre

HRS

calcul anticollision et évitement

GPS + INU + Extrapolation

Calcul des lois d'Anticollision ⌐43

altitude

Carte locale Temporaire (double) (absolu) ⌐40 ⌐4

(7)

(6)

En vol

**2**

trajectoire

profil

profil

**46** Analyse de Situation Instantanée et Future

VAL NAV

Calcul des - loi d'évit(Z) - loi d'évit(XYZ) ⌐48

(6)
(7)

Poste de commande

**90**

discrets

ordres

**FIG. 4A**

Alarme - lumineuse - sonore - vocale ⌐51

Affichage d'un Directeur d'ordre ⌐53

24

FIG. 4 B

EP 0 802 469 B1

(12)

(20) ────────────────────── LGZ ──────────────── MDF

────────────────── HRS ──────────────

**6** CALCUL IMAGERIE

**70** ⌐ LG

Validation de la navigation et mémorisation des anomalies

**71** ⌐ $Z_A$   ⌐ HRS

**7**

(40) ──── extrait du fichier ────

Extraction et Mémorisation du Terrain Survolé

Constitution du Profil Réellement Survolé

(40)

$Z_A$-HRS

$Z_T$

LG

**60** Génération d'imagerie Synthétique

$\Delta p = Z_T - Z_A + HRS$
$\Delta p*$ calculé   **72**

**79**

Mémoire de Stockage des Anomalies lors du Radio-Altimètre valide

$\Delta p$   $\Delta p*$

**74** seuil S1   seuil S2 **75**

**77**
Analyse Anomalies

(90)

(46)

$\Delta p$

vidéo

discret

**55** Imagerie Synthétique du paysage

**57** Indicateur de Conformité

FIG.5

FIG.6

FIG. 7

FIG. 8 A

FIG. 8 B

FIG.9A

FIG.9B

FIG.9C

FIG.9D

FIG.10